# EUROPEAN PATENT APPLICATION

(11) **EP 3 518 378 A1**
(43) Date of publication of application: **31.07.2019**
(21) Application number: 18154010.5
(22) Date of filing: 30.01.2018
(51) Int. Cl.: H02J 7/00

(54) **SYSTEM FOR ELECTRICAL CHARGING OF SHOPPING CARTS EQUIPPED WITH ELECTRICAL DEVICES**

(71) Applicant: Smartcart Oy, 01510 Vantaa (FI)
(72) Inventor: Hirn, Mikael, 00730 Helsinki (FI); Heiman, Petteri, 00220 Helsinki (FI)
(74) Representative: Suominen, Kaisa Liisa

(57) **Abstract**

Disclosed is a system for electrical charging of shopping carts equipped with electrical devices. The system comprises (a) an electrical charging station comprising a charging profile made of an electrically insulating material and a charging element made of an electrically conducting material, wherein the charging profile is arranged to partially cover the charging element, and (b) at least one shopping cart comprising an electrical device and a conductor arrangement electrically connected to the electrical device, wherein the conductor arrangement comprises (i) a casing comprising a first part comprising an opening and a second part arranged to be in contact with the shopping cart, and (ii) a conductor element having a first surface and a second surface, a spring, a spring support and a conductor arranged inside the casing, wherein the first surface of the conductor element and the conductor are arranged in electrical contact with each other, wherein the conductor is arranged to be in contact with the charging element of the electrical charging station through the opening of the first part of the casing, the spring is arranged to apply a pushing force to the second surface of the conductor element and the conductor element is arranged to allow movement of the conductor inside the casing, and the conductor comprises a cylindrical part and a bearing allowing movement of the cylindrical part.

## Description

### TECHNICAL FIELD

The present disclosure relates generally to charging smart shopping carts, and more specifically, to a system for electrical charging of shopping carts equipped with electrical devices.

### BACKGROUND

In a retail store or grocery store, shoppers typically push a shopping cart through aisles while selecting items of merchandise as per their shopping lists. When the shoppers finish with selecting and placing items in the shopping cart as per their shopping lists, they proceed to a cash register/data terminal in a checkout area of the store to make the payment. Retailers continuously struggle to efficiently allocate human resources and available computing power to perform operational and point-of-sale tasks. Traditionally, such tasks are resource intensive and they entail significant expenditure of time and money at each retail outlet. To address this problem of retailers and to also make the experience simpler for shoppers, smart shopping carts have been introduced at retail stores.

A smart shopping cart has one or more electric devices integrated with the shopping cart. The one or more electric devices can be used for tracking the location of the cart, for automated billing, etc. Such electric devices may include a barcode scanner, a weight sensor, a location sensor etc. The barcode scanner scans barcodes of items placed in the shopping cart. The smart shopping cart may also include a display that shows the total price of items placed, thus making it easy for shoppers to budget their shopping. It may also compare the items placed in the smart shopping cart with a user's shopping list, and tick items off the list once placed. The smart shopping cart may include an integrated battery, which typically powers the electric devices.

A major challenge with such existing smart shopping carts lies in transferring electricity to charge the integrated battery that is used to power the electric devices. Wired chargers are used to charge the integrated battery, which can cause a substantial amount of wear and tear due to friction.

In one approach, the smart shopping cart may be equipped with a conductor arrangement for wirelessly charging the integrated battery. The conductor arrangement may transfer electricity to charge the integrated battery from a charging station when the smart shopping cart is inserted into the charging station. The conductor arrangement may include a conductor and a conductor spring that is arranged to be in contact with the conductor. Typically, the conductor spring produces a pushing force (e.g. a restoring force). If the pushing force of the conductor spring is less than a frictional force of wheels, which is in a direction perpendicular to a normal movement of the smart shopping cart, the conductor spring will be unable to move the smart shopping cart between charging aisles of the charging station.

This results in a gap between the conductor and the charging aisles, which may lead to poor electrical conductivity. Due to misalignment in the aisles, the conductor with the conductor spring structure may not adequately charge the integrated battery of the smart shopping cart while moving the shopping cart between charging aisles of the charging station. On the other hand, if the pushing force of the conductor spring is selected to be too high, then the force needed by a customer to push the smart shopping cart to the charging station will be too large for convenient operation. Therefore, in light of the foregoing discussion, there exists a need to overcome the aforementioned drawbacks in existing approaches for charging a battery used to power the electric devices in a smart shopping cart.

### SUMMARY

The present disclosure seeks to provide a system for electrical charging of shopping carts equipped with electrical devices, comprising
(a) an electrical charging station comprising a charging profile made of an electrically insulating material and a charging element made of an electrically conducting material, wherein the charging profile is arranged to partially cover the charging element, and
(b) at least one shopping cart comprising an electrical device and a conductor arrangement electrically connected to the electrical device, wherein the conductor arrangement comprises
   (i) a casing comprising a first part comprising an opening and a second part arranged to be in contact with the shopping cart, and
   (ii) a conductor element having a first surface and a second surface, a spring, a spring support and a conductor arranged inside the casing, wherein the first surface of the conductor element and the conductor are arranged in electrical contact with each other,
   wherein the conductor is arranged to be in contact with the charging element of the electrical charging station through the opening of the first part of the casing, the spring is arranged to apply a pushing force to the second surface of the conductor element and the conductor element is arranged to allow movement of the conductor inside the casing, and the conductor comprises a cylindrical part and a bearing allowing movement of the cylindrical part.

Embodiments of the present disclosure substantially eliminate or at least partially address the aforementioned problems in the prior art, and enable wireless charging of the electric devices associated with the smart shopping cart with minimum friction.

Additional aspects, advantages, features and objects of the present disclosure are made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
FIG. 1 is an exemplary view of a system for electrical charging of a shopping cart that is equipped with an electrical device that comprises an electrical charging station and a conductor arrangement electrically connected to the electrical device, in accordance with an embodiment of the present disclosure;
FIG. 2 is an exploded view of a conductor arrangement in accordance with an embodiment of the present disclosure;
FIGs. 3A and 3B illustrate top views of a conductor arrangement comprising a spring in accordance with an embodiment of the present disclosure;
FIG. 4 is a sectional view of a conductor arrangement in accordance with an embodiment of the present disclosure;
FIG. 5 is a schematic illustration of a crimp connector that is connected to a conductor element in a conductor arrangement in accordance with an embodiment of the present disclosure;
FIG. 6 is a schematic illustration of parts of an electrical charging station that is connected to tubular structures in the electrical charging station in accordance with an embodiment of the present disclosure;
FIG. 7 is a schematic illustration of a conductor in a conductor arrangement connected to a charging element of an electrical charging station in accordance with an embodiment of the present disclosure;
FIG. 8 is a schematic electrical diagram of an electrical charging station that is adapted to conduct electrical power to charge an electrical device that is mounted on a shopping cart in accordance with an embodiment of the present disclosure;
FIG. 9 illustrates a typical system that electrically charges a shopping cart equipped with an electrical device; and
FIG. 10 illustrates a typical system that electrically charges a shopping cart equipped with an electrical device.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

The present disclosure seeks to provide a system for electrical charging of shopping carts equipped with electrical devices, comprising
(a) an electrical charging station comprising a charging profile made of an electrically insulating material and a charging element made of an electrically conducting material, wherein the charging profile is arranged to partially cover the charging element, and
(b) at least one shopping cart comprising an electrical device and a conductor arrangement electrically connected to the electrical device, wherein the conductor arrangement comprises
   (i) a casing comprising a first part comprising an opening and a second part arranged to be in contact with the shopping cart, and
   (ii) a conductor element having a first surface and a second surface, a spring, a spring support and a conductor arranged inside the casing, wherein the first surface of the conductor element and
the conductor are arranged in electrical contact with each other, wherein the conductor is arranged to be in contact with the charging element of the electrical charging station through the opening of the first part of the casing, the spring is arranged to apply a pushing force to the second surface of the conductor element and the conductor element is arranged to allow movement of the conductor inside the casing, and the conductor comprises a cylindrical part and a bearing allowing movement of the cylindrical part.

The present disclosure thus provides a system that reduces friction between the electrical charging station and the conductor attached to the shopping cart and provides wireless charging solution to the shopping carts. As friction is reduced, the wear and tear is also reduced. The spring and the conductor element arrangement thus compensate the positioning of the shopping cart in the electrical charging station, the possible misalignment of the electrical charging station, and the wear of wheels of the shopping cart. The spring and the conductor element arrangement may help in effectively charging the electronic devices of the shopping cart even there is misalignment in the charging profile. Indeed, it is believed to be necessary to have a spring element in a structure of this kind. When using the present spring structure, it is possible to obtain the spring effect at the end of the shopping cart, instead of having it at the end of the charging station. Additionally, the present structure is easier to make and more reliable in use, when compare to prior art. Moreover, the present structure does not require any structural modifications in the basic structure of the shopping cart. Further the present structure enables easier replacement of the spring element during maintenance.

In the system, the charging profile is an insulator, so that the charging profile does not conduct electricity to the structure of the electrical charging station. As will be discussed below, the electrical charging station may be arranged in connection with a storage station of the shopping carts, and it typically has a self-standing structure made for example from metallic tubes. The charging profile may be arranged to partially cover the charging element for electrical insulation.

In an embodiment, the spring is arranged in between the conductor element and the spring support. The spring is preferably made of metal. For example, the spring can be made of copper, alloy, aluminium or stainless steel. In another embodiment, the spring may be a coiled spring with a movement of 2 millimetres (mm) to 10mm.

The electrical device may be any electrical device used in connection with the shopping carts, such as a bar code scanner, a display connected to an information system of the shop etc. The conductor arrangement is electrically connected to the electrical device to allow electricity from the electrical charging station to be transferred to the electrical device for charging it. In an embodiment, the conductor arrangement may allow the electricity from the electrical charging station to be transferred to a battery of the shopping cart for charging it. The battery of the shopping cart may be used to power the electric devices of the shopping cart.

The conductor is preferably made of an electrically conductive material, such as metal. It is also possible to make it from an insulating material, provided that it can still be in electrical contact with the conductor element and the electrical device, to transfer electricity from the electrical charging station to the electrical device of the shopping cart.

According to an embodiment, the conductor element and the spring are arranged to allow the conductor to move towards and away from the charging element. This movement allows for the system to work even when the shopping cart is slightly misaligned and if the parts of the system are slightly worn out.

According to another embodiment, the spring is arranged in contact with the second surface of the conductor element to apply the pushing force to the second surface of the conductor element. According to another embodiment, the pushing force ranges from 13 Newtons to 25 Newtons. According to another embodiment, the pushing force applied by the spring is selected to be higher than a frictional force of a wheel of the shopping cart.

In an embodiment, a minimum pushing force that is required to move the shopping cart between the charging profile is at least 13 Newtons. In another embodiment, the pushing force applied by the spring should be less than 20 Newtons to 25 Newtons. The pushing force may be obtained by choosing an appropriate material of the spring and dimensions of the conductor arrangement. In an embodiment, a movement of 2-10 mm is required from the spring for compression and decompression. If the force for the spring is selected too high, the user of the shopping cart has to use excessive force to insert the shopping cart between the charging profiles. In a typical use case there are several shopping carts (such as 10-20) between the charging profiles. Proper selection of the force moves the shopping carts such that they are substantially half way between the charging profiles, or in middle of the charging profiles.

According to another embodiment, the conductor arrangement is arranged in a handle of the shopping cart. The conductor arrangement may also be arranged at another position of the shopping cart, such as the wheel or wheels or the base of the shopping cart. The handle is however preferred, as it is far away from ground (i.e. further away from dust, rocks and snow, for example), and it is also believed that it is easier for a user to position the shopping cart into a storage station comprising the electrical charging system, when the alignment is made using the handle. Indeed, according to an embodiment, the electrical charging station is arranged in a storage station of the shopping carts. Such a combination has the advantage that the shopping carts are typically automatically returned to the electrical charging station and hence no additional steps are needed from the shop personnel.

The conductor arrangement is electrically connected to the electrical device. According to an embodiment, this is achieved with the conductor arrangement further comprising a crimp connector connecting the conductor element with an electrical wire for transferring electricity to the electrical device. The electrical wires are preferably arranged inside the casing of the conductor arrangement, and suitably covered between the conductor arrangement and the electrical device.

According to another embodiment, the electrical charging station is arranged in a storage station of the shopping carts.

In an embodiment, the charging element is made of metal. For example, the charging element can be made of copper, alloy, aluminium or stainless steel. In another embodiment, the charging profile is made of an insulating plastic material. The plastic material may be any suitable material, such as polyethylene, polypropylene, polyamide etc. The charging profile could also be made of another type of material, such as wood, if desired.

According to an embodiment, each shopping cart comprises a first conductor arrangement comprises a first polarity and a second conductor arrangement comprises a second polarity that is opposite to the first polarity. According to another embodiment, the conductor arrangements are arranged at opposing sides of the handle of the shopping cart. This embodiment allows the system to work also with shopping carts not comprising metallic wheels that are in contact with the ground. The two conductor arrangements can also be placed in such a manner that one is arranged in the handle and the other in another part of the shopping cart, as discussed above. The electrical path between the two conductor arrangements is of course insulated such that the user cannot get electric shocks. For example, the conductor arrangement on a left side of the shopping cart comprises a positive polarity and the conductor arrangement on a right side of the shopping cart comprises a negative polarity.

According to yet another embodiment, the charging profile is attachable by attachment means and the charging element is attachable to the charging profile via the form of the charging profile. The attachment means may be any suitable mans, such as screws, rivets, nails or glue. The charging profile has a form that allows the charging element to be sled into it, such as a C-profile. This allows for the charging profile to have a smooth surface, which further reduces friction when the shopping carts are positioned in the charging system and removed from it.

In an embodiment, the electrical charging station further comprises a guide element arranged to lock the charging element into place. The guide element is typically placed at the extremity of the charging element, and may be attached by any suitable means. Its function is to lock the charging element into place, especially when the charging element is attached only via the form of the charging profile, and to help guide the shopping carts into the system.

According to another embodiment, the electrical device is configured to enter in sleep mode when the shopping cart is inserted into the electrical charging station. According to another embodiment, the electrical device is configured to start when the shopping cart is removed from the electrical charging station.

According to another embodiment, the spring has a first operational state wherein the spring is compressed to apply the pushing force to allow the movement of the conductor towards the charging element for enabling the conductor to be in contact with the charging element. In another embodiment, the spring has a second operational state wherein the spring is partially decompressed to allow the movement of the conductor away from the charging element for enabling the conductor to be in contact with the charging element. When the shopping cart is inserted into the electrical charging station, the spring may be compressed or decompressed to allow the conductor to be in electrical contact with the electrical charging station.

Embodiments of the present disclosure reduce friction between the electrical loading station and the conductor attached to the shopping cart and provide wireless charging solution to the shopping carts. The embodiments of the present disclosure compensate the positioning of the shopping cart in the electrical charging station, the possible misalignment of the electrical charging station, and the wear of wheels of the shopping car and effectively charge the electronic devices of the shopping cart.

### DETAILED DESCRIPTION OF THE DRAWINGS

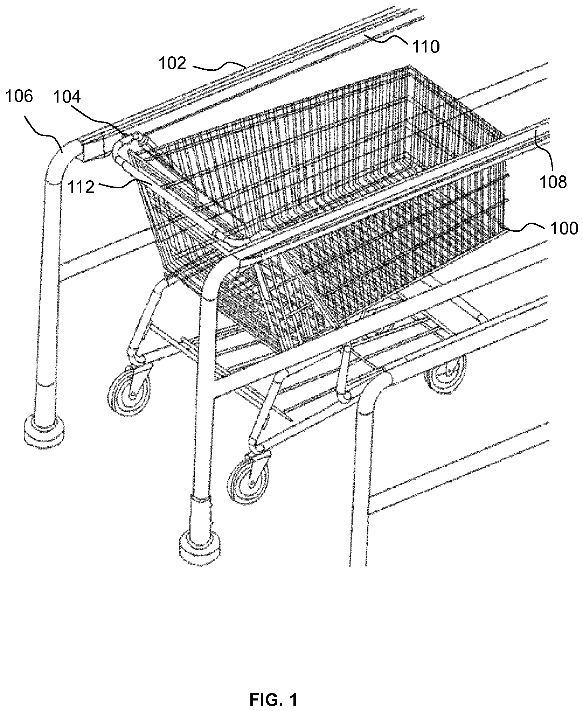

FIG. 1 is an exemplary view of a system for electrical charging of a shopping cart **100** that is equipped with an electrical device that comprises an electrical charging station **102** and a conductor arrangement **104** electrically connected to the electrical device, in accordance with an embodiment of the present disclosure. The electrical charging station **102** may be arranged in a storage station of the shopping cart **100.** The storage station comprises a plurality of tubular structures **106.** The electrical charging station **102** comprises a charging profile **108** made of an electrically insulating material (e.g. plastic) and a charging element **110** made of an electrically conducting material (e.g. copper). The electrical charging station **102** (e.g. charging rail) is attached to the plurality of tubular structures **106.** The conductor arrangement **104** may be attached to a handle **112** of the shopping cart **100,** one on each end.

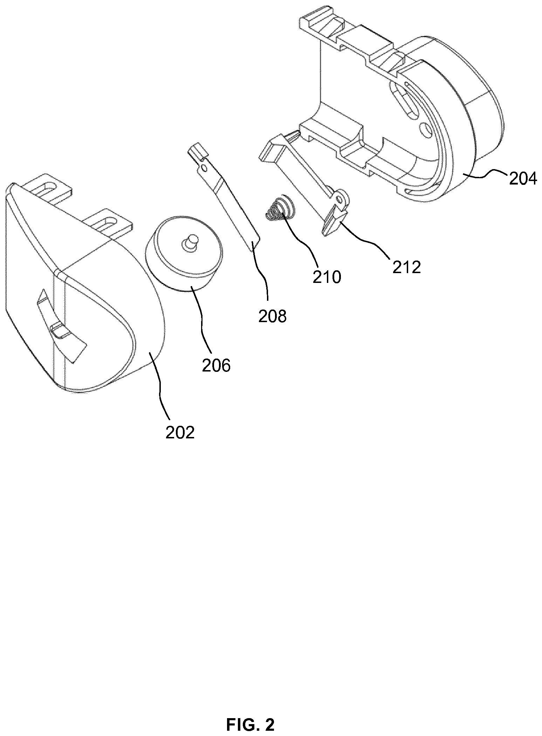

FIG. 2 is an exploded view of a conductor arrangement in accordance with an embodiment of the present disclosure. The conductor arrangement comprises a casing that includes a first part **202** and a second part **204,** a conductor **206,** a conductor element **208,** a spring **210** and a spring support **212.** The first part **202** and the second part **204** of the casing enclose all the components of the conductor arrangement. The second part **204** of the casing is arranged to be in contact with a handle of a shopping cart. The conductor **206** is arranged to be in contact with a charging element of an electrical charging station through an opening of the first part **202** of the casing. The conductor element **208** comprises a first surface that is arranged to be in electrical contact with the conductor **206.** The spring **210** is arranged in contact with a second surface of the conductor element **208** to apply a pushing force to the second surface of the conductor element **208.** The spring support **212** provides support to the spring **210** inside the casing. The functions of these parts are as have been described above.

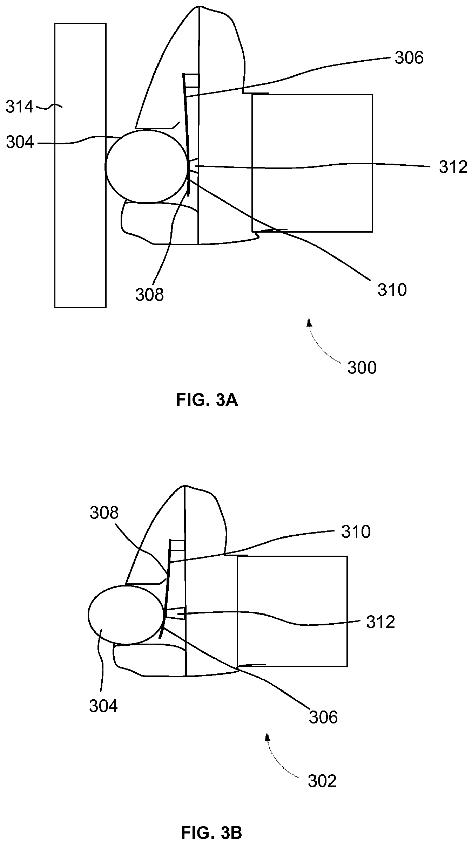

FIGs. 3A and 3B illustrate top views **300, 302** of a conductor arrangement comprising a spring **312** in accordance with an embodiment of the present disclosure. The conductor arrangement comprises a conductor **304,** a conductor element **306** having a first surface **308** and a second surface **310** and the spring **312.** The top view **300** of the conductor arrangement depicts the spring **312** that is in a first operational state. In the first operational state (FIG. 3A), the spring **312** is compressed to apply a pushing force to allow the movement of the conductor **304** towards a charging element **314** of an electrical charging station for enabling the conductor **304** to be in contact with the charging element **314** when a shopping cart is inserted into the electrical charging station. The top view **302** of the conductor arrangement depicts the spring **312** that is in a decompressed state. In the decompressed state (FIG. 3B), the spring **312** is decompressed to allow the movement of the conductor **304** away from the conductor element **306** when the shopping cart is removed from the electrical charging station.

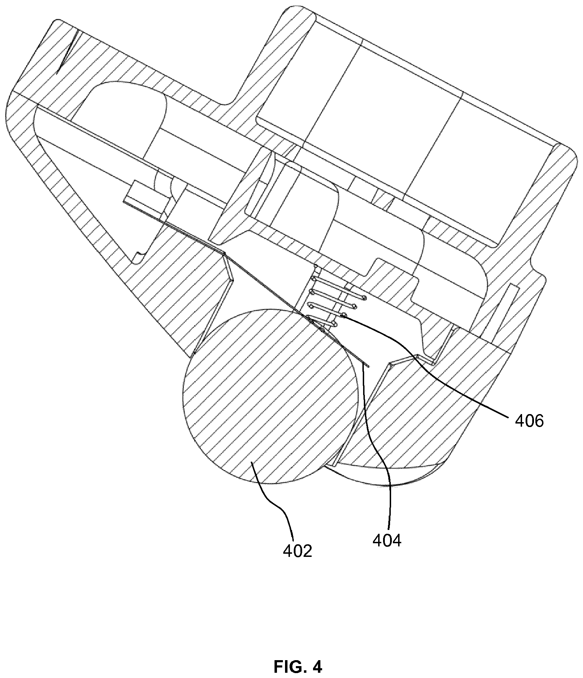

FIG. 4 is a sectional view of a conductor arrangement in accordance with an embodiment of the present disclosure. The conductor arrangement comprises a conductor **402,** a conductor element **404** and a spring **406.** The functions of these parts are as have been described above.

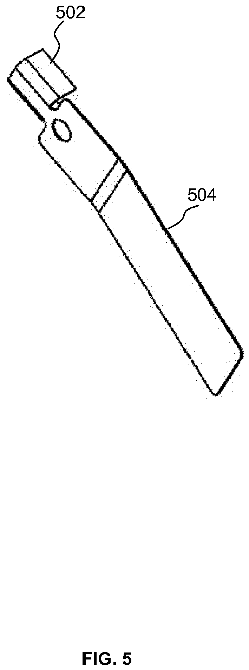

FIG. 5 is a schematic illustration of a crimp connector **502** that is connected to a conductor element **504** in a conductor arrangement in accordance with an embodiment of the present disclosure. The crimp connector **502** transfers electricity from the conductor element **504** to a wire inside a second part of a casing. The functions of these parts are as have been described above.

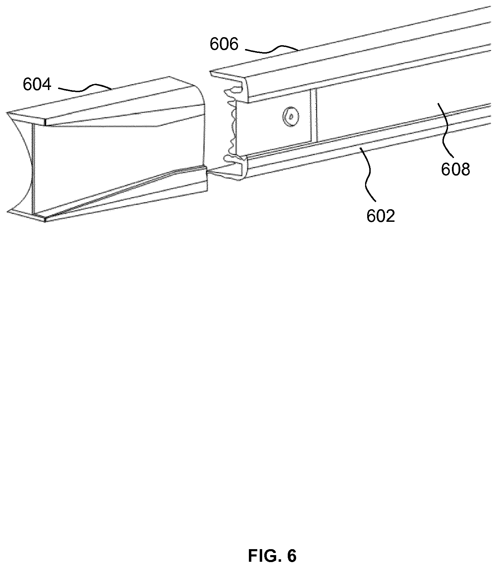

FIG. 6 is a schematic illustration of parts of an electrical charging station **602** that is connected to tubular structures in the electrical charging station **602** in accordance with an embodiment of the present disclosure. The electrical charging station **602** comprises a guide element **604,** a charging profile **606** and a charging element **608.** The guide element **604** is attached to the tubular structures. The guide element **604** is arranged to lock the charging element **608** within the charging profile **606.** The charging profile **606** is attached to the tubular structures by attachment means (e.g. one or more rivets) and the charging element **608** is attached to the charging profile **606** by the form of the charging profile **606.**

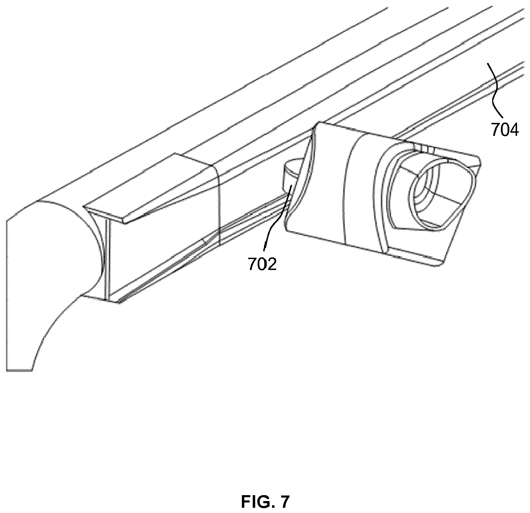

FIG. 7 is a schematic illustration of a conductor **702** in a conductor arrangement connected to a charging element **704** of an electrical charging station in accordance with an embodiment of the present disclosure. The conductor **702** is arranged to be in contact with the charging element **704** of the electrical charging station that allows the charging of an electrical device that is mounted on a shopping cart or on a part of it.

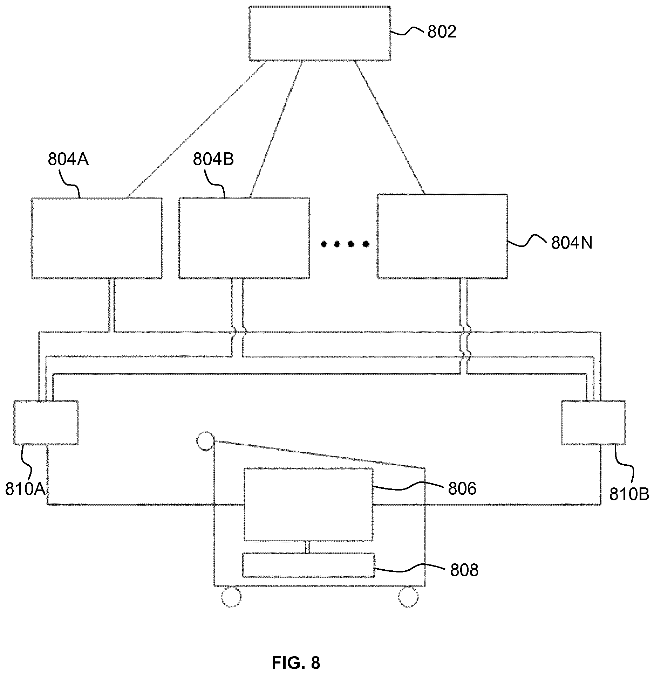

FIG. 8 is a schematic electrical diagram of an electrical charging station that is adapted to conduct electrical power to charge an electrical device **808** that is mounted on a shopping cart in accordance with an embodiment of the present disclosure. The schematic electrical diagram of the electrical charging station comprises a power source **802,** a plurality of AC to DC converters **804A-N,** a step down transformer **806** and the electrical device **808.** The plurality of AC to DC converters **804AN** receives 230V AC power from the power source **802.** The plurality of AC to DC converters **804A-N** converts 230V AC power to 12V DC and transmits to the electrical charging station. A charging element of the electrical charging station receives 12V DC from the plurality of AC to DC converters **804A-N,** and conducts 12V DC power in the charging element. The charging element comprises (a) a positive charging element **810A** on a left side of the electrical charging station to conduct a positive charge, and (b) a negative charging element **810B** on a right side of the electrical charging station to conduct a negative charge. The step down transformer **806** is arranged to be in contact with the positive charging element **810A** and the negative charging element **810B.** The step down transformer **806** receives 12V DC power from the positive charging element **810A** and the negative charging element **810B** and converts 12V DC to 5V DC to charge the electrical device **808.** The electrical device **808** is coupled with the step down transformer **806** for charging means.

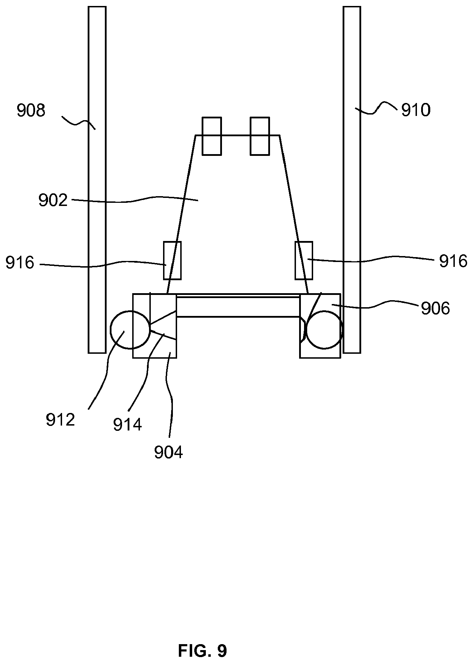

FIG. 9 illustrates a typical system that electrically charges a shopping cart **902** equipped with an electrical device. The system comprises an electrical charging station and the shopping cart **902.** The shopping cart **902** comprises a first conductor arrangement **904** and a second conductor arrangement **906.** The first conductor arrangement **904** and the second conductor arrangement **906** are electrically connected to the electrical device. The electrical charging station comprises a first charging profile **908** and a second charging profile **910.** The first charging profile **908** and the second charging profile **910** may be made of an electrically insulating material (e.g. plastic). The first charging profile **908** and the second charging profile **910** each comprise a charging element made of an electrically conducting material (e.g. copper). When the shopping cart **902** is inserted between the first charging profile **908** and the second charging profile **910,** the first charging profile **908** may provide a positive polarity through the first conductor arrangement **904** and the second charging profile **910** may provide a negative polarity through the second conductor arrangement **906** for charging the electrical device. The conductor arrangements **904, 906** each comprise a conductor **912** and a conductor spring **914** that is arranged to be in contact with the conductor **912.** Typically, the conductor spring **914** produces a pushing force (e.g. a restoring force). If the pushing force of the conductor spring **914** is less than a frictional force of wheels **916,** which is in a direction perpendicular to a normal movement of the shopping cart **902,** the conductor spring **914** will be unable to move the shopping cart **902** between the charging profiles **908, 910** of the electrical charging station. This results in a gap between the conductor **912** and the charging profiles **908, 910** which may lead to poor electrical conductivity. Further, due to misalignment in the charging profiles **908, 910** the conductor **912** with the conductor spring **914** structure may not adequately charge the electrical device or a battery of the shopping cart **902** while moving the shopping cart **902** between the charging profiles **908, 910** of the electrical charging station.

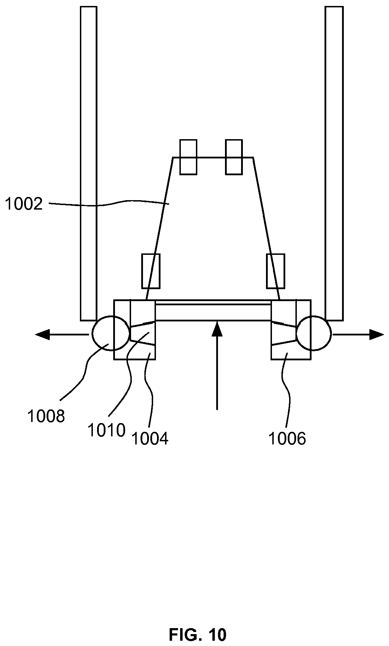

FIG. 10 illustrates a typical system that electrically charges a shopping cart **1002** equipped with an electrical device. The system comprises conductor arrangements **1004, 1006.** The conductor arrangements **1004, 1006** each comprise a conductor **1008** and a conductor spring **1010** that is arranged to be in contact with the conductor **1008.** Typically, the conductor spring **1010** produces a pushing force (e.g. a restoring force). If the pushing force of the conductor spring **1010** is selected to be too high, then the force needed by a user to push the shopping cart **1002** into an electrical charging station will be too large for convenient operation.

Modifications to embodiments of the present disclosure described in the foregoing are possible without departing from the scope of the present disclosure as defined by the accompanying claims. Expressions such as including , comprising , incorporating , have , is used to describe and claim the present disclosure are intended to be construed in a non-exclusive manner, namely allowing for items, components or elements not explicitly described also to be present. Reference to the singular is also to be construed to relate to the plural.

## Claims

1. A system for electrical charging of shopping carts equipped with electrical devices, comprising
(a) an electrical charging station comprising a charging profile made of an electrically insulating material and a charging element made of an electrically conducting material, wherein the charging profile is arranged to partially cover the charging element, and
(b) at least one shopping cart comprising an electrical device and a conductor arrangement electrically connected to the electrical device, wherein the conductor arrangement comprises
(i) a casing comprising a first part comprising an opening and a second part arranged to be in contact with the shopping cart, and
(ii) a conductor element having a first surface and a second surface, a spring, a spring support and a conductor arranged inside the casing, wherein the first surface of the conductor element and the conductor are arranged in electrical contact with each other,
wherein the conductor is arranged to be in contact with the charging element of the electrical charging station through the opening of the first part of the casing, the spring is arranged to apply a pushing force to the second surface of the conductor element and the conductor element is arranged to allow movement of the conductor inside the casing, and the conductor comprises a cylindrical part and a bearing allowing movement of the cylindrical part.

2. A system according to claim 1, wherein the conductor element and the spring are arranged to allow movement of the conductor towards and away from the charging element.

3. A system according to claim 1 or 2, wherein the spring is arranged in contact with the second surface of the conductor element to apply the pushing force to the second surface of the conductor element.

4. A system according to any of the preceding claims, wherein the pushing force ranges from 13 Newtons to 25 Newtons.

5. A system according to any of the preceding claims, wherein the pushing force applied by the spring is selected to be higher than a frictional force of a wheel of the shopping cart.

6. A system according to any of the preceding claims, wherein the conductor arrangement is arranged in a handle of the shopping cart.

7. A system according to any of the preceding claims, wherein the conductor arrangement further comprises a crimp connector connecting the conductor element with an electrical wire for transferring electricity to the electrical device.

8. A system according to any of the preceding claims, wherein the electrical charging station is arranged in a storage station of the shopping ca rts.

9. A system according to any of the preceding claims, wherein each shopping cart comprises a first conductor arrangement having a first polarity and a second conductor arrangement having a second polarity opposite the first polarity.

10. A system according to claim 9, wherein the conductor arrangements are arranged at opposing sides of the handle of the shopping cart.

11. A system according to any of the preceding claims, wherein the charging profile is attachable by attachment means and the charging element is attachable to the charging profile via the form of the charging profile, and the electrical charging station further comprises a guide element arranged to lock the charging element into place.

12. A system according to any of the preceding claims, wherein the electrical device is configured to enter in sleep mode when the shopping cart is inserted into the electrical charging station.

13. A system according to any of the preceding claims, wherein the electrical device is configured to start when the shopping cart is removed from the electrical charging station.

14. A system according any of the preceding claims, wherein
- the spring has a first operational state wherein the spring is compressed to apply the pushing force to allow the movement of the conductor towards the charging element, and
- the spring has a second operational state wherein the spring is partially decompressed to allow the movement of the conductor away from the charging element, for enabling the conductor to be in contact with the charging element.
